# EUROPÄISCHE PATENTSCHRIFT

(11) **EP 1 530 993 B1**
(45) Veröffentlichungstag und Bekanntmachung des Hinweises auf die Patenterteilung: **31.12.2008**
(21) Anmeldenummer: 04024480.8
(22) Anmeldetag: 14.10.2004
(51) Int. Cl.: B01D 46/46, B01D 29/21

(54) **Filterelement für Bandfiltereinrichtungen für Fluide sowie Bandfiltereinrichtung für ein solches Filterelement**
Filter element for belt filter for fluids and belt filter for such a filter element
Elément de filtre pour filtre à bande pour fluides et filtre à bande pour un tel élément de filtre

(30) Priorität: 12.11.2003 DE 10352702
(43) Veröffentlichungstag der Anmeldung: 18.05.2005
(73) Patentinhaber: HYDAC FILTERTECHNIK GMBH, 66280 Sulzbach/Saar (DE)
(72) Erfinder: Glaubitz, Manfred Robert, 45472 Mülheim (DE)
(74) Vertreter: Bartels & Partner

(56) Entgegenhaltungen:
- DE-A- 10 126 443
- DE-C- 4 139 324
- US-A- 5 573 667
- DATABASE WPI Section EI, Week 198751 Derwent Publications Ltd., London, GB; Class S02, AN 1987-361826 XP002321801 -& SU 1 312 375 A (ASTRKHAN CONS TECH) 23. Mai 1987 (1987-05-23)

## Beschreibung

Die Erfindung bezieht sich auf ein Filterelement für Bandfiltereinrichtungen für Fluide, mit einem das Filtermaterial tragenden, Fluiddurchlässe aufweisenden hohlen Wickelkörper, der einen inneren Filterhohlraum für gefiltertes Fluid definiert und einen Wickel des auf ihn mit einer Mehrzahl von Windungen aufgewickelten Filtermaterials in Form von Filterband trägt, das unter Drehen des Wickelkörpers bedarfsweise abwickelbar ist.

Außerdem betrifft die Erfindung eine Bandfiltereinrichtung für ein solches Filterelement.

Filterelemente der oben genannten Art sind bereits bekannt, vgl. DE 101 26 443 A1. Werden derartige Filterelemente als Druckbandfilter benutzt, wie dies in dem vorstehend genannten Dokument gezeigt ist, dann wird aufgrund eines Differenzdruckes zwischen der äußeren Mantelfläche des Wikkels des Filterbandes und dem inneren Filterhohlraum der Wickel von außen nach innen vom zu filternden Fluid durchströmt. Im Laufe des Filtrationsvorganges tritt eine fortschreitende Verschmutzung der äußeren Lage oder äußeren Lagen des Wickels ein, so dass es erforderlich ist, eine entsprechende Bandlänge des verschmutzten Filterbandes vom Wickel abzuwickeln, damit an der umfänglichen Mantelfläche des Wickels wiederum eine frische Filterfläche zur Verfügung steht.

Beim Betrieb von Bandfiltereinrichtungen, bei denen derartige bekannte Filterelemente benutzt werden, bereitet es Schwierigkeiten, eine gleichbleibende Filtrationsleistung und -güte aufrecht zu erhalten. Die Vorgänge des Abwickelns des Filterbandes müssen so gesteuert werden, dass sichergestellt ist, dass der auf dem Wickelkörper jeweils verbleibende Wickel die geforderte Filterleistung erbringen kann, d. h. bei der erforderlichen Größe des Volumenstromes die zu fordernde Filtrationsfeinheit erbringt. Im Hinblick hierauf ergibt sich bei der Benutzung der bekannten Filterelemente ein beträchtlicher Steuerungs- und Überwachungsaufwand für die durchzuführende Abwicklung des Filterbandes.

Ausgehend von diesem Stand der Technik stellt sich die Erfindung die Aufgabe, ein Filterelement zu schaffen, das sich demgegenüber durch ein verbessertes Betriebsverhalten, insbesondere hinsichtlich der Vereinfachung der Steuerung des Betriebsablaufes einer zugeordneten Bandfiltereinrichtung, auszeichnet.

Bei einem Filterelement der eingangs genannten Art ist diese Aufgabe erfindungsgemäß dadurch gelöst, dass ein die Anzahl der Umdrehungen des Wickels beim Abwickeln des Filterbandes an eine Zähleinrichtung signalisierendes Koppelglied am Wickel oder am Wickelkörper angeordnet ist.

Dank des Vorhandenseins eines Koppelgliedes, das beim erfindungsgemäßen Filterelement die eingangsseitige Komponente eines Systems bildet, das beim Abwickeln des Filterbandes die Anzahl der Umdrehungen des Wikkels ermittelt, kann auf sehr einfache Weise die Größe der Bandlänge des jeweils abzuwickelnden Filterbandes anhand des gewonnenen Zählergebnisses bestimmt werden. Die Betriebssteuerung einer zugehörigen Bandfiltereinrichtung läßt sich somit auf sehr einfache Weise so gestalten, dass eine gleichbleibende Filtrationsleistung aufrecht erhalten bleibt.

Je nach Art des benutzten Umdrehungs-Zählsystems kann das mit dem Wickel verbundene Koppelglied in geeigneter Weise ausgebildet sein. So könnte für eine optische oder mechanische Abtastung der Drehbewegung des Wickels an diesem oder am Wickelkörper eine optisch abtastbare Gestaltung oder ein Kupplungselement für mechanische Abtastung vorgesehen sein.

Bei besonders vorteilhaften Ausführungsbeispielen ist als eingangsseitige Komponente für ein Umdrehungs-Zählsystem ein solches Koppelglied vorgesehen, das die Erzeugung elektrischer Zählimpulse ermöglicht. In diesem Fall kann als Koppelglied ein ein örtliches Magnetfeld erzeugender Signalgeber vorgesehen sein, der mit einem einen elektrischen Zählimpuls liefernden, auf das Magnetfeld ansprechenden Impulsgenerator zusammen wirkt.

Vorzugsweise ist in solchem Falle ein Dauermagnet als Signal gebendes Koppelglied vorgesehen.

Gegenstand der Erfindung ist auch eine Bandfiltereinrichtung für ein erfindungsgemäßes Filterelement, welche die Merkmale des Anspruches 6 in dessen Gesamtheit aufweist.

Für den Betrieb mit einem Filterelement, das als Koppelglied für die Umdrehungs-Zähleinrichtung einen Dauermagneten aufweist, kann hierbei die Anordnung so getroffen sein, dass an der Halterung, an der der Wickelkörper mit dem Wickel des Filterbandes drehbar gelagert ist, ein auf das Feld des Dauermagneten ansprechender Reed-Kontakt angeordnet ist, der elektrische Umdrehungs-Zählimpulse erzeugt.

Nachstehend ist die Erfindung anhand eines in der Zeichnung dargestellten Ausführungsbeispieles im einzelnen erläutert.
Es zeigen:
- Fig. 1 eine schematisch vereinfacht und abgebrochen gezeichnete perspektivische Ansicht des oberen Endbereiches eines Ausführungsbeispieles des Filterelementes und lediglich desjenigen Teiles einer zugeordneten Bandfiltereinrichtung, die Teil der Halterung für die drehbare Lagerung des Filterelementes bildet, und
- Fig. 2 eine schematisierte Ansicht eines druckdicht eingeschlossenen Reed-Kontaktes zur Erzeugung elektrischer Zählimpulse.

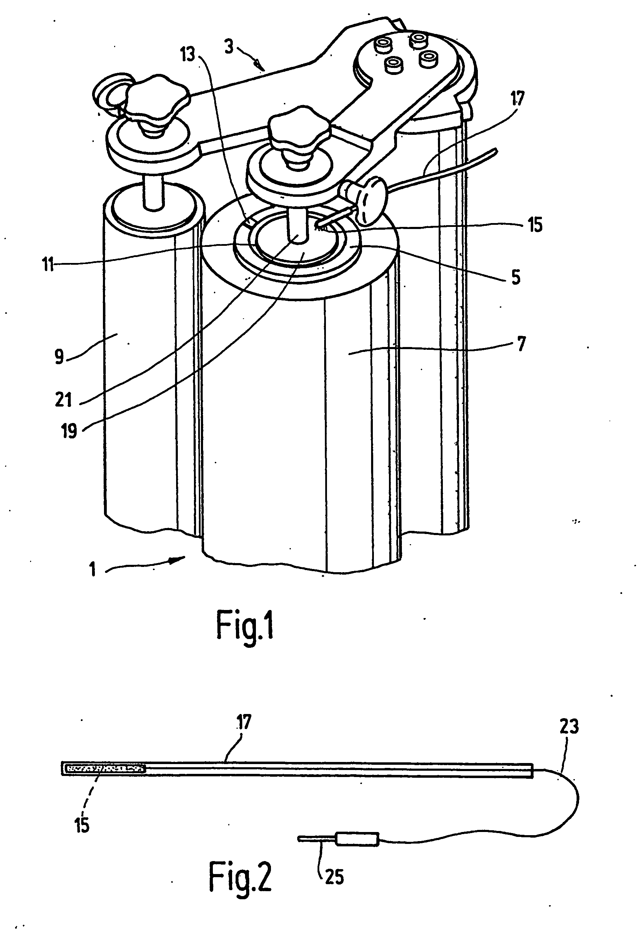

Fig. 1 zeigt von einem Ausführungsbeispiel des erfindungsgemäßen Filterelementes 1 lediglich dessen oberen Teilbereich, eingesetzt in eine zugeordnete Bandfiltereinrichtung, von der ebenfalls lediglich einige Bestandteile gezeigt sind, namentlich Teile einer als Ganzes mit 3 bezeichneten Halterung, mittels deren das Filterelement 1 innerhalb eines ebenfalls nicht dargestellten Filtergehäuses drehbar gelagert ist. In bei derartigen Filterelementen an sich bekannter Weise, vgl. DE 101 26 443 A1, weist das Filterelement 1 einen stützrohrartigen Wickelkörper 5 auf, auf dem ein Wickel 7 aus Filterband aufgewickelt ist. Vorzugsweise wird als Filterband ein Filtervlies verwendet, beispielsweise ein Glas-Polyester-Vlies oder ein Papiervlies, das zu einem Wickel 7 mit umfänglich etwa einhundert Windungen aufgerollt ist.

Der Wickelkörper 5, der einen inneren Filterhohlraum definiert, in den das gefilterte Fluid durch Fluiddurchlässe im Wickelkörper 5 eintritt, nachdem es den Wickel 7 von außen nach innen durchströmt hat, weist am nicht gezeigten, unteren Ende des Wickelkörpers 5 eine Öffnung für den Austritt des gefilterten Fluids auf. Ein in diese Öffnung eingreifender Stutzen bildet den unteren Teil der Drehlagerung für das Filterelement 1.

Das Filterband wird vom Wickel 7 bedarfsweise abgewickelt, indem es auf eine angetriebene Aufwickelrolle 9 aufgewickelt wird. Die Ermittlung der vom Wickel 7 abgewickelten Bandlänge des Filterbandes erfolgt durch eine Zähleinrichtung zum Zählen der Anzahl der Abwickel-Umdrehungen des Wickels 7. Beim vorliegenden Ausführungsbeispiel befindet sich am oberen Ende des Wickelkörpers 5, wo dessen innerer Filterhohlraum durch einen ebenen Verschlußdeckel 11 abgeschlossen ist, ein vom Verschlußdeckel 11 radial nach außen versetzter Dauermagnet 13. Das vom Dauermagneten 13 erzeugte, örtliche Magnetfeld beeinflußt bei jeder Umdrehung des Wikkelkörpers 5 mit dem auf ihm befindlichen Wickel 7 einen Reed-Kontakt 15 (siehe auch Fig. 2), der in einer Umhüllung 17 dicht eingeschlossen ist. Das den Reed-Kontakt 15 enthaltende Ende der Umhüllung 17 ist an einer Trägerscheibe 19 verankert, die Teil der Halterung 3 bildet. Genauer gesagt ist die Trägerscheibe 19 mit einem Achszapfen 21 fest verbunden, der wiederum undrehbar an der Halterung 3 angebracht ist. Mit ihrer dem Verschlußdeckel 11 des Wickelkörpers 5 zugewandten ebenen Fläche bildet die Trägerscheibe 19 einen Anschlag zur axialen Sicherung des drehbar gelagerten Filterelementes 1.

Wie Fig. 2 deutlicher zeigt, weist die Umhüllung 17 für den Reed-Kontakt 15 einen druckfesten Schlauch auf, der am in Fig. 2 linksseitig gelegenen vorderen Ende, an dem sich der Reed-Kontakt 15 befindet, durch Verschmelzen oder Verstöpseln geschlossen ist. Der in einem ihn umgebenden Glasröhrchen in den die Umhüllung 17 bildenden Schlauch eingesetzte Reed-Kontakt 15 weist ein zweiadriges Anschlußkabel 21 mit einem zweipoligen Anschlußstecker 25 auf. Die Umhüllung 17, beispielsweise ein Polypropylenschlauch ist als druckdichte Durchführung für das Anschlußkabel 23 aus dem nicht dargestellten Filtergehäuse nach außen geführt. Über den Stecker 25 sind die vom Reed-Kontakt 15 bei jedem Passieren des Dauermagneten 13 bei jeder Umdrehung des Wickels 7 erzeugten Signale als Zählimpulse für ein außerhalb des Filtergehäuses befindliches Zählwerk vorgesehen. Die gezählte Anzahl der Umdrehungen beim Abwickeln des Wickels 7 ermöglicht die Ermittlung der Bandlänge beim Abwickeln des Filterbandes.

Vorstehend wurde die Erfindung am Beispiel der Anordnung eines Dauermagneten 13 am Filterelement 1 und der dadurch ermöglichten Erzeugung elektrischer Signalimpulse für einen Umdrehungszähler beschrieben. Es versteht sich, dass andere Ausbildungen des Koppelgliedes am Filterelement 1 benutzt werden könnten, um eine optische oder mechanische Abtastung der Abwickel-Drehbewegung des Filterelementes 1 zu ermöglichen. Bei der Filtration von Fluiden mit hohem Verschmutzungsgrad und/oder wenig oder nicht lichtdurchlässigen Fluiden ist die Erzeugung elektrischer Zählimpulse gegenüber optischer oder mechanischer Abtastung vorteilhafter.

## Patentansprüche

1. Filterelement (1) für Bandfiltereinrichtungen für Fluide, mit einem das Filtermaterial tragenden, Fluiddurchlässe aufweisenden hohlen Wickelkörper (5), der einen inneren Filterhohlraum für gefiltertes Fluid definiert und einen Wickel (7) des auf ihn mit einer Mehrzahl von Windungen aufgewickelten Filtermaterials in Form von Filterband trägt, das unter Drehen des Wickelkörpers (5) bedarfsweise abwickelbar ist, **dadurch gekennzeichnet, dass** ein die Anzahl der Umdrehungen des Wickels (7) beim Abwickeln des Filterbandes an eine Zähleinrichtung si-gnalisierendes Koppelglied (13) am Wickel (7) oder am Wickelkörper (5) angeordnet ist.

2. Filterelement nach Anspruch 1, **dadurch gekennzeichnet, dass** als Koppelglied mindestens ein ein örtliches Magnetfeld erzeugender Signalgeber (13) für die Zusammenwirkung mit einem einen elektrischen Zählimpuls liefernden, auf das Magnetfeld ansprechenden Impulsgenerator vorgesehen ist.

3. Filterelement nach Anspruch 2, **dadurch gekennzeichnet, dass** mindestens ein Dauermagnet (13) als signalgebendes Koppelglied vorgesehen ist.

4. Filterelement nach Anspruch 1, **dadurch gekennzeichnet, dass** als Koppelglied am Wickel (7) oder am Wickelkörper (5) eine zur Erzeugung eines Zählimpulses optisch oder mechanisch abtastbare Gestaltung vorgesehen ist.

5. Filterelement nach einem der Ansprüche 1 bis 4, **dadurch gekennzeichnet, dass** es an einem Ende des Wickelkörpers (5) ein den inneren Filterhohlraurn abschließendes Verschlußelement (11) und am entgegengesetzten Ende des Wickelkörpers (5) eine Öffnung des Filterhohlraumes für den Austritt des gefilterten Fluids aufweist.

6. Bandfiltereinrichtung für ein Filterelement (1) nach einem der Ansprüche 1 bis 5, mit einer Halterung (3), an der der Wickelkörper (5) mit dem Wickel (7) des Filterbandes innerhalb eines Filtergehäuses drehbar gelagert ist, **gekennzeichnet durch** eine an der Halterung (3) angeordnete, auf das Signal des Koppelgliedes (13) ansprechende Einrichtung (15) zur Erzeugung von Umdrehungs-Zählimpulsen.

7. Bandfiltereinrichtung nach Anspruch 6, **dadurch gekennzeichnet, dass** die Halterung (3) für den Wickelkörper (5) als Teile von dessen Drehlagerung einen an der Öffnung des Filterhohlraumes befindlichen hohlen Lagerstutzen und am entgegengesetzten Ende des Wickelkörpers (5) einen an dessen Verschlußelement (11) angrenzenden, die Drehachse definierenden, undrehbaren Achszapfen (21) aufweist.

8. Bandfiltereinrichtung nach Anspruch 7, **dadurch gekennzeichnet, dass** der Achszapfen (21) als Träger für die auf das Signal des Koppelgliedes (13) ansprechende Einrichtung (15) zur Erzeugung der Umdrehungs-Zählimpulse vorgesehen ist.

9. Bandfiltereinrichtung nach Anspruch 8, **dadurch gekennzeichnet, dass** der Achszapfen (21) eine mit ihm verbundene, zum ebenen Verschlußelement (11) des Wickelkörpers (5) parallele Scheibe (19) als Träger für eine Sensoreinrichtung (15) aufweist, die mit einem radial außerhalb des Verschlußelementes (11) am Wickelkörper (5) gelegenen Koppelglied (13) zur Signalerzeugnung zusammenwirkt.

10. Bandfiltereinrichtung nach Anspruch 9, **dadurch gekennzeichnet, dass** die Scheibe (19) am Achszapfen (21) einen Reed-Kontakt (15) trägt, der zur Erzeugung der Umdrehungs-Zählimpulse auf das Feld eines als Koppelglied vorgesehenen Dauermagneten (13) anspricht.

11. Bandfiltereinrichtung nach Anspruch 10, **dadurch gekennzeichnet, dass** der Reed-Kontakt (15) in einer ihn gegen den im Filtergehäuse herrschenden Fluiddruck abdichtenden Umhüllung (17) angeordnet ist.

12. Bandfiltereinrichtung nach Anspruch 11, **dadurch gekennzeichnet, dass** die Umhüllung durch einen Druckschlauch (17) gebildet ist, der an seinem vorderen Ende, an dem sich der Reed-Kontakt (15) befindet, geschlossen ist und der sich zusammen mit einem in ihm befindlichen Anschlußkabel (23) des Reed-Kontaktes (15) aus dem Filter gehäuse nach außen erstreckt.

## Claims

1. A filter element (1) for band filter devices for fluids with a hollow winding element (5) carrying the filter material and having fluid passages which defines an inner filter cavity for filtered fluid and carries a spool (7) of the filter material wound onto it with a plurality of windings in the form of filter band which can be unwound as required by turning the winding element (5), **characterised in that** a coupling member (13) signalling the number of rotations of the spool (7) when unwinding the filter band to a counting device is disposed on the spool (7) or on the winding element (5).

2. The filter element according to Claim 1, **characterised in that** at least one signal transmitter (13) producing a local magnetic field is provided as a coupling member for interaction with an impulse generator delivering an electrical counting impulse responding to the magnetic field.

3. The filter element according to Claim 2, **characterised in that** at least one permanent magnet (13) is provided as a signal transmitting coupling member.

4. The filter element according to Claim 1, **characterised in that** an optically or mechanically scannable arrangement for producing a counting impulse is provided on the spool (7) or on the winding element (5) as a coupling member.

5. The filter element according to any of Claims 1 to 4, **characterised in that** it has on one end of the winding element (5) a closure element (11) closing the inner filter cavity and on the opposite end of the winding element (5) an opening of the filter cavity for the discharge of the filtered fluid.

6. A band filter device for a filter element (1) according to any of Claims 1 to 5 with a holder (3) on which the winding element (5) with the spool (7) of the filter band is rotatably mounted within a filter housing, **characterised by** a device (15) disposed on the holder (3) responding to the signal of the coupling member (13) for producing rotation counting impulses.

7. The band filter device according to Claim 6, **characterised in that** the holder (3) for the winding element (5) has as parts of the rotational mounting of the latter a hollow mounting support piece located at the opening of the filter cavity and at the opposite end of the winding element (5) a non-rotatable pivot pin (21) adjacent to the closure element of the latter (11) defining the axis of rotation.

8. The band filter device according to Claim 7, **characterised in that** the pivot pin (12) is provided as a carrier for the device (15) responding to the signal of the coupling member (13) in order to produce the rotation counting impulses.

9. The band filter device according to Claim 8, **characterised in that** the pivot pin (21) has a disc (19) parallel to the level closure element (11) of the winding element (5) connected to said pivot pin as a carrier for a sensor device (15) which interacts with a coupling member (13) placed radially outside of the closure element (11) on the winding element (5) for producing signals.

10. The band filter device according to Claim 9, **characterised in that** the disc (19) carries on the pivot pin (21) a reed contact (15) which responds to the field of a permanent magnet (13) provided as a coupling member for producing the rotation counting impulses.

11. The band filter device according to Claim 10, **characterised in that** the reed contact (15) is disposed in a casing (17) sealing it off from the fluid pressure prevailing in the filter housing.

12. The band filter device according to Claim 11, **characterised in that** the casing is formed by a pressure hose (17) which is closed on its front end where the reed contact (15) is located and which extends outwardly from the filter housing together with a connection cable (23) of the reed contact (15) located in the latter.

## Revendications

1. Elément (1) de filtre pour des dispositifs à bande de filtration de fluide, comprenant un corps (5) creux de bobine, qui porte la matière filtrante, qui a des traversées pour le fluide, qui définit une chambre creuse intérieure de filtre pour du fluide filtré et qui porte une bobine (7) de la matière filtrante enroulée en ayant sur elle une multiplicité de spires sous la forme d'une bande de filtre qui peut être déroulée en cas de besoin en faisant tourner le corps (5) de bobine, **caractérisé en ce qu'**un organe (13) de couplage, signalant à un dispositif de comptage le nombre de tours de la bobine (7) lors du déroulement de la bande de filtre, est disposé sur la bobine (7) ou sur le corps (5) de bobine.

2. Elément de filtre suivant la revendication 1, **caractérisé en ce qu'**il est prévu, comme organe de couplage, au moins un générateur (13) de signal, produisant un champ magnétique local pour la coopération avec un générateur d'impulsions fournissant une impulsion électrique de comptage et sensible au champ magnétique.

3. Elément de filtre suivant la revendication 2, **caractérisé en ce qu'**il est prévu au moins un aimant (13) permanent comme organe de couplage donnant un signal.

4. Elément de filtre suivant la revendication 1, **caractérisé en ce qu'**il est prévu, comme organe de couplage sur la bobine (7) ou sur le corps (5) de bobine, une conformation pouvant être détectée optiquement ou mécaniquement pour la production d'une impulsion de comptage.

5. Elément de filtre suivant l'une des revendications 1 à 4, **caractérisé en ce qu'**il a, à une extrémité du corps (5) de bobine, un élément (11) de fermeture fermant la chambre intérieure creuse du filtre et, à l'extrémité opposée du corps (5) de bobine, une ouverture de la chambre creuse du filtre pour la sortie du fluide filtré.

6. Dispositif de filtration à bande pour un élément (1) de filtre suivant l'une des revendications 1 à 5, comprenant une fixation (3) à laquelle le corps (5) de bobine est monté tournant avec la bobine (7) de la bande de filtre à l'intérieur d'une enveloppe de filtre, **caractérisé par** un dispositif (15) de production d'impulsions de comptage de tours, qui est monté sur la fixation (3) et qui est sensible au signal de l'organe (13) de couplage.

7. Dispositif de filtration à bande suivant la revendication 6, **caractérisé en ce que** le fixation (3) du corps (5) de bobine a, en tant que parties de son montage en rotation, une tubulure creuse, formant palier, se trouvant à l'ouverture de la chambre creuse du filtre et, à l'extrémité opposée du corps (5) de bobine, un axe (21) non tournant, voisin de son élément (11) de fermeture et définissant l'axe de rotation.

8. Dispositif de filtration à bande suivant la revendication 7, **caractérisé en ce que** l'axe (21) est prévu comme support du dispositif (15) sensible au signal de l'organe (13) de couplage pour la production des impulsions de comptage de tours.

9. Dispositif de filtration à bande suivant la revendication 8, **caractérisé en ce que** l'axe (21) a, comme support d'un dispositif (15) de capteur, un disque (19) qui lui est relié, qui est parallèle à l'élément (11) de fermeture plan du corps (5) de bobine et qui coopère, pour la production du signal, avec un organe (13) de couplage mis sur le corps (5) de bobine radialement à l'extérieur de l'élément (11) de fermeture.

10. Dispositif de filtration à bande suivant la revendication 9, **caractérisé en ce que** le disque (19) porte sur l'axe (21) un contact (15) reed qui, pour la production des impulsions de comptage de tours, est sensible au champ d'un aimant (13) magnétique prévu en tant qu'organe de couplage.

11. Dispositif de filtration à bande suivant la revendication 10, **caractérisé en ce que** le contact (15) reed est disposé dans une gaine (17) le rendant étanche par rapport à la pression du fluide régnant dans l'enveloppe du filtre.

12. Dispositif de filtration à bande suivant la revendication 11, **caractérisé en ce que** la gaine est formée par un tuyau (17) souple, résistant à la pression, qui est fermé à son extrémité avant où se trouve le contact (15) reed et qui, ensemble avec un câble (23) de raccordement se trouvant en lui du contact (15) reed, s'étend à l'extérieur hors de l'enveloppe du filtre.
